# EUROPÄISCHE PATENTANMELDUNG

(11) **EP 4 353 411 A1**
(43) Veröffentlichungstag der Anmeldung: **17.04.2024**
(21) Anmeldenummer: 23200958.9
(22) Anmeldetag: 29.09.2023
(51) Int. Cl.: B24D 3/00, B24D 3/20, B24D 3/32, B24D 18/00, B33Y 80/00, B24D 3/28

(54) **WERKZEUG ZUM MATERIALABTRAG UND VERFAHREN ZU SEINER HERSTELLUNG**

(30) Priorität: 13.10.2022 DE 102022126743
(71) Anmelder: Ernst-Abbe-Hochschule Jena, 07745 Jena (DE); Günter Effgen GmbH, 55756 Herrstein (DE)
(72) Erfinder: BLIEDTNER, Jens, 07745 Jena (DE); HENKEL, Sebastian, 07745 Jena (DE); HAGE, Till-Hendrik, 07743 Jena (DE); GERHARDT, Martin, 55758 Niederwörresbach (DE)
(74) Vertreter: Gleim Petri Patent- und Rechtsanwaltspartnerschaft mbB

(57) **Zusammenfassung**

Die Erfindung betrifft ein Werkzeug (1) zum Materialabtrag, umfassend eine auf einem Substrat (2) aufgebrachte erste Abrasivschicht (3.1) mit einer ersten Kunststoffbindung (4.1), wobei die erste Kunststoffbindung (4.1) eine erste Kunststoffmatrix (5.1), die als Bindematerial dient, in das alle weiteren Komponenten der ersten Kunststoffbindung (4.1) eingebettet sind, und ein erstes Abrasivmaterial (6.1), welches eine erste Abrasivmaterialhärte, eine erste Korngröße und eine erste Konzentration in der ersten Kunststoffbindung (4.1) aufweist, wodurch ein erster Reibungskoeffizient der ersten Kunststoffbindung (4.1) festgelegt ist, enthält, wobei die erste Kunststoffbindung (4.1) ein erstes Stützmaterial (7.1), welches eine erste Stützmaterialhärte, die geringer ist als die erste Abrasivmaterialhärte, und eine erste Stützmaterialkonzentration in der ersten Kunststoffbindung (4.1) aufweist, wodurch eine erste Härte der ersten Kunststoffbindung (4.1) festgelegt ist, enthält. Die Erfindung betrifft weiterhin Verfahren zur additiven Fertigung eines Werkzeugs (1) zum Materialabtrag.

## Beschreibung

Die Erfindung betrifft ein Werkzeug zum Materialabtrag mit geometrisch unbestimmter Schneide, umfassend mindestens eine Abrasivschicht auf einem Substrat, sowie ein Verfahren zur additiven Fertigung eines Werkzeugs zum Materialabtrag.

Klassische Bearbeitungsverfahren mit geometrisch unbestimmter Schneide, wie Schleifen, Läppen oder Polieren, nehmen bei vielen Fertigungsprozessen, insbesondere in Bereichen der optischen Technologien, eine wichtige Rolle ein. Dabei ist vor allem die Oberflächenbearbeitung von hartspröden Werkstoffen, mit dem Ziel der Erzeugung einer möglichst defektfreien Werkstoffoberfläche geringer Rauheit, sehr zeit- und kostenaufwändig. Bei hochharten oder besonders bruchempfindlichen Werkstoffen funktionieren etablierte Bearbeitungsverfahren nur bedingt oder sind unwirtschaftlich.

Auch die wachsenden Anforderungen an Werkzeuge zur Materialbearbeitung, wie Schleif- und Polierwerkzeuge, bezüglich wirtschaftlicher Arbeitsweise und Flexibilität stellen für die Fertigung von Schleif- und Polierwerkzeugen eine Herausforderung dar. Besonders hoch sind die Anforderungen an Werkzeuge zur Materialbearbeitung für Fein- und Feinstbearbeitung von Werkstückoberflächen, wie das Feinschleifen mit gebundenem Korn oder das Polieren mit losem Korn.

Bei klassischen Sinter- oder Formgießverfahren ist die gestalterische Freiheit bei der Form der Werkzeuge stark beschränkt, weshalb im Stand der Technik auch additive Fertigungsverfahren für die Herstellung von Schleif- und Polierwerkzeugen verwendet werden. Insbesondere die sogenannte *Fused Filament Fabrication,* bei der ein Werkstück schichtweise aus einem schmelzfähigen Kunststoff oder geschmolzenem Metall aufgebaut wird, eignet sich zur Herstellung von Schleif- und Polierwerkzeugen.

Ein Verfahren zur additiven Fertigung von Schleifwerkzeugen ist durch die WO 2020/003212 A1 offenbart. Bei dem Verfahren wird auf einem Substrat mindestens eine Schicht eines ersten Pulvers, das mindestens ein Polymer umfasst, aufgebracht. Das Pulver wird anschließend aufgeschmolzen und verbindet sich dadurch mit dem Substrat. Anschließend können Schichten eines zweiten Pulvers auf die bereits aufgebrachten Schichten des ersten Pulvers aufgebracht und aufgeschmolzen werden. Die Pulver können abrasive Partikel, ausgewählt aus einer Gruppe, bestehend aus Aluminiumoxid, Siliziumcarbid, Borcarbid, Bornitrid, Diamant oder Kombinationen davon, enthalten.

Ein weiteres Verfahren zur Herstellung von metallgebundenen und glasgebundenen Schleifwerkzeugen ist aus der WO 2017/173009 A1 bekannt. Bei dem Verfahren wird mittels 3D-Druck aus einem Vorprodukt, das in Glas oder Metall gebundene abrasive Partikel enthält, ein Schleifwerkzeug gefertigt.

Aus der US 10,456,886 B2 ist ein Verfahren zur Herstellung eines porösen Polierkissens bekannt, bei dem eine Vielzahl von Verbundschichten mit einem 3D-Drucker in einer vorgegebenen Dicke aufgebracht werden. Dabei wird sowohl eine poröse Komponente als auch eine härtbare Komponente aufgebracht und die poröse Komponente durch einen Erwärmungsprozess oder einen Spülprozess entfernt, um eine poröse Oberfläche zu bilden.

Nachteilig bei den beschriebenen Verfahren ist, dass insbesondere das Herstellen bzw. Sintern von aus Metall- und Glasbindungen bestehenden Schleifwerkzeugen sehr teuer und aufwändig ist. Abrasive Partikel, wie beispielsweise Diamantkörner, müssen zunächst in das Metall oder Glas, das als Bindungsmaterial dient, integriert werden. Das 3D-Drucken von Metallen oder Gläsern benötigt zudem hohe Temperaturen im Erhitzungsprozess.

Die US 2020/0070311 A1 offenbart ein Schleifwerkzeug mit einer Polymerbindung, umfassend ein Polymerbindungsmaterial mit abrasiven Partikeln, die in einer Polymermatrix enthalten sind. Die abrasiven Partikel können erste abrasive Partikel und zweite abrasive Partikel umfassen, die in unterschiedlichen Regionen des Schleifwerkzeugs vorhanden sind. Die ersten und zweiten abrasiven Partikel können jeweils aus Diamant, Bornitrid, Borcarbid, Siliziumcarbid, Siliziumnitrid oder einem Metalloxid bestehen. Das Schleifwerkzeug kann scheibenförmig ausgebildet sein und weist mindestens einen gewundenen Kühlkanal und einen bogenförmigen Kühlkanal auf, wobei die Kühlkanäle sich mindestens teilweise durch das Schleifwerkzeug erstrecken. Das Schleifwerkzeug weist jedoch keine Stützstruktur auf, wodurch die gegenüber den abrasiven Partikeln weiche Kunststoffmatrix bei einem Schleifprozess mechanisch nachgibt und sich schnell abnutzt. Dadurch weist das offenbarte Schleifwerkzeug keine optimalen Schleifeigenschaften sowie eine sehr geringe Lebensdauer auf.

Es ist daher die Aufgabe der Erfindung, ein Werkzeug zum Materialabtrag bereitzustellen, das einen flexibel einstellbaren Reibungskoeffizienten sowie eine vergleichsweise lange Lebensdauer aufweist. Es ist weiterhin die Aufgabe der Erfindung ein Verfahren zur Herstellung eines solchen Werkzeugs zum Materialabtrag bereitzustellen.

Die Aufgabe wird durch ein Werkzeug zum Materialabtrag gelöst, welches eine auf einem Substrat aufgebrachte erste Abrasivschicht mit einer ersten Kunststoffbindung umfasst. Das Substrat kann beispielsweise eine Bauplattform, auf der das Werkzeug zum Materialabtrag aufgebaut wird und von der das Werkzeug zum Materialabtrag nach seiner Fertigung gelöst wird, oder ein Werkzeugträger, der das Werkzeug zum Materialabtrag auch während einer Materialbearbeitung trägt, sein. Das Substrat kann beispielsweise aus Metall, Keramik oder einer Mischverbindung bestehen. Die erste Abrasivschicht kann als Schleifschicht und/oder als Polierschicht verwendet werden und weist ein erstes Abrasivmaterial auf. Als Abrasivmaterial bzw. Abrasive oder Abrasivstoffe werden Hartstoffkörner bezeichnet, die zum Materialabtrag durch Zerspanen mit gebundenem Korn eingesetzt werden. Das Abrasivmaterial ist vorteilhaft möglichst hart und verschleißfest, damit Material von einem Werkstück abgetragen werden kann und die Hartstoffkörner möglichst lange scharf bleiben. Das Abrasivmaterial ist vorzugsweise möglichst beständig gegen thermische und chemische Belastungen, um den hohen Bearbeitungstemperaturen und schnellen Temperaturwechseln, die beim Schleifen oder Polieren entstehen, standzuhalten und um beim Kontakt mit Luft, Kühl- und Schmierstoffen und einem Material des Werkstücks keine chemischen Bindungen einzugehen. Als gebundenes Korn werden Hartstoffkörner bezeichnet, die in einem Bindematerial, beispielsweise einer Kunststoffbindung, chemisch und/oder mechanisch gebunden sind. Die erste Kunststoffbindung enthält eine erste Kunststoffmatrix, die als Bindematerial dient, in das alle weiteren Komponenten der ersten Kunststoffbindung eingebettet sind. Die Kunststoffmatrix ist vorteilhafter Weise ein förderbarer Werkstoff, beispielsweise ein Thermoplast, damit sie zur additiven Fertigung des Werkzeugs zur Materialbearbeitung schmelz- und fließfähig sowie gefördert werden kann. Die Kunststoffbindung enthält außerdem das erste Abrasivmaterial, welches eine erste Abrasivmaterialhärte, eine erste Korngröße und eine erste Konzentration in der ersten Kunststoffbindung aufweist, wodurch ein erster Reibungskoeffizient der ersten Kunststoffbindung festgelegt ist. Der Reibungskoeffizient bezieht sich dabei stets auf ein zu bearbeitendes Werkstück bzw. eine zu bearbeitende Werkstückoberfläche. Er beschreibt das Verhältnis zwischen einer Reibungskraft und einer Anpresskraft zwischen dem Werkzeug zum Materialabtrag und dem Werkstück. Die Werkstücke können eine beliebige Geometrie aufweisen und beispielsweise aus Glas, Keramik, Glaskeramik, Kristall, Metall, Hartmetallen oder auch Verbundwerkstoffen mit hoher Härte, auch Faserverbundwerkstoffen, bestehen. Durch das erste Abrasivmaterial ist ein erster Reibungskoeffizient der ersten Kunststoffbindung festgelegt. Die erste Kunststoffbindung enthält darüber hinaus ein erstes Stützmaterial, welches eine erste Stützmaterialhärte, die geringer ist als die erste Abrasivmaterialhärte, und eine erste Stützmaterialkonzentration in der ersten Kunststoffbindung aufweist, wodurch eine erste Härte der ersten Kunststoffbindung festgelegt ist. Die Stützmaterialhärte liegt vorzugsweise im Bereich von 7 bis 9 auf der Härteskala von Mohs (Mohs-Härte), die Abrasivmaterialhärte liegt vorzugsweise im Bereich von 9 bis 10 auf der Härteskala von Mohs. Das Stützmaterial kann ebenfalls aus Hartstoffkörnern gebildet sein. Vorzugsweise ist dann ein Durchmesser der Hartstoffkörner des Abrasivmaterials größer als ein Durchmesser der Hartstoffkörner des Stützmaterials. Die Durchmesser der Hartstoffkörner für das Abrasivmaterial beträgt bevorzugt zwischen 0,05 µm und 64 µm. Wenn die entsprechende Abrasivschicht als Schleifschicht verwendet werden soll, betragen die Durchmesser der Hartstoffkörner für das Abrasivmaterial besonders bevorzugt zwischen 10 µm und 64 µm. Wenn die entsprechende Abrasivschicht als Polierschicht verwendet werden soll, betragen die Durchmesser der Hartstoffkörner für das Abrasivmaterial besonders bevorzugt zwischen 0,05 µm und 1 µm. Der Durchmesser für die Hartstoffkörner für das Stützmaterial liegt bevorzugt im Bereich von 0,1 µm bis 0,4 µm einschließlich, kann aber je nach Anwendung auch darunter oder darüber liegen. Dadurch und aufgrund dessen, dass die erste Stützmaterialhärte geringer ist als die erste Abrasivmaterialhärte, wirkt das Stützmaterial zur definierten Abstützung für das Abrasivmaterial, welches bei einem Materialabtrag in das Stützmaterial bzw. die Kunststoffbindung hineingedrückt wird. Dabei ist es im Sinne der Erfindung, dass das Stützmaterial bzw. die Kunststoffbindung bei einem Materialabtrag, wenn auch nur wenig, nachgeben, wodurch eine Lebensdauer des Abrasivmaterials bzw. des Werkzeugs zum Materialabtrag verlängert wird. Dies ermöglicht grundsätzlich auch eine schonendere Materialbearbeitung, wodurch am Werkstück eine bessere Oberflächenqualität erzielt werden kann. Gleichzeitig kann durch die Konzentration des Stützmaterials die Rückstellkraft des Abrasivmaterials gezielt gesteuert werden: Bei einer hohen Konzentration des Stützmaterials kann das Abrasivkorn in der weichen Polymermatrix nur wenig zurückfedern, was einen höheren Materialabtrag am Werkstück zur Folge hat. Im Gegensatz dazu führt eine niedrige Konzentration des Stützmaterials zu einem stärkeren Rückfedern in der Polymermatrix, wodurch der Materialabtrag verringert wird, was einer schonenderen Materialbearbeitung entspricht. Die erste Kunststoffmatrix umgibt das erste Abrasivmaterial und das erste Stützmaterial, welche jeweils durch adhäsive Wechselwirkungen an die Kunststoffmatrix gebunden sind.

Vorteilhaft weist das Werkzeug zum Materialabtrag mehrere Abrasivschichten auf und benachbarte Abrasivschichten weisen vorteilhaft voneinander verschiedene Abrasivmaterialien und/oder Korngrößen und/oder Abrasivmaterialkonzentrationen auf. Die Abrasivschichten können in Richtung einer Werkzeugachse, um die das Werkzeug zum Materialabtrag gedreht werden kann, nebeneinander, beispielsweise in Form von konzentrischen Kreisringen, angeordnet sein. Alternativ können die Abrasivschichten in Richtung einer Werkzeugachse übereinander angeordnet sein. Dann können bei einem Materialabtrag eine definierte Materialdicke mit einer ersten Abrasivschicht und eine weitere definierte Materialdicke mit einer zweiten Abrasivschicht abgetragen werden. Die Schichtdicken der Abrasivschichten können jeweils auf die abzutragenden Materialdicken eingestellt sein. Wenn die Abrasivschichten nebeneinander angeordnet sind, kann die Schichtdicke der Abrasivschichten ebenfalls jeweils auf abzutragende Materialdicken eingestellt sein, wenn beispielsweise von einer sphärischen Werkstückoberfläche ein Material abgetragen werden soll.

Benachbarte Abrasivschichten bzw. deren Kunststoffbindungen können voneinander verschiedene Abrasivmaterialien aufweisen und die Abrasivmaterialien können sich hinsichtlich ihrer Abrasivmaterialhärte und/oder ihrer Korngröße voneinander unterscheiden. Benachbarte Abrasivschichten können alternativ oder zusätzlich voneinander verschiedene Stützmaterialien und/oder Stützmaterialkonzentrationen aufweisen. Die Kunststoffbindungen der weiteren Abrasivschichten weisen ebenfalls jeweils eine Kunststoffmatrix, ein Abrasivmaterial sowie ein Stützmaterial auf. Wenn benachbarte Abrasivschichten voneinander verschiedene Stützmaterialien aufweisen, können die Stützmaterialien sich hinsichtlich ihrer Stützmaterialhärte voneinander unterscheiden. Die benachbarten Abrasivschichten weisen dann unterschiedliche Eigenschaften, beispielsweise unterschiedliche Härten, Zähigkeiten oder Beständigkeiten gegen thermische und/oder chemische Belastungen auf.

Der ersten Kunststoffbindung und/oder den weiteren Kunststoffbindungen der weiteren Abrasivschichten können zusätzliche Additive zugegeben werden, die beispielsweise die Eigenschaften der Kunststoffbindung für den Herstellungsprozess des Werkzeugs zur Materialbearbeitung verbessern, indem eine Schmelztemperatur abgesenkt oder eine Viskosität im geschmolzenen Zustand angepasst wird. Die Additive können alternativ oder zusätzlich die Eigenschaften des Werkzeugs zur Materialbearbeitung für den Schleifprozess oder den Polierprozess verbessern, indem beispielsweise durch die Additive eine Beständigkeit gegen Hitze oder vorgegebene Stoffe und/oder Chemikalien verbessert wird. Ein Beispiel für ein solches Additiv ist Ceroxid, welches zu einer zusätzlichen chemischen Politur beiträgt. Andere Additive dienen als Aktivierungsstoffe zur Erhöhung der Oberflächenenergie an der Grenzfläche zwischen Werkzeug und Werkstück, beispielsweise Tenside, Öle und Laugen, z.B. KOH.

Das erste Abrasivmaterial und/oder die weiteren Abrasivmaterialien können Diamant, Siliziumcarbid, Siliziumnitrid, Aluminiumoxid, Zirkoniumoxid, Saphir, kubisches Bornitrid (CBN), Hartmetalle, insbesondere Wolframcarbid, oder eine Kombination dieser Stoffe enthalten. Das erste Abrasivmaterial muss zum Materialabtrag härter als ein Material des zu bearbeitenden Werkstücks sein. Die Auswahl des ersten Abrasivmaterials hängt daher im Wesentlichen von dem zu bearbeitenden Werkstück ab.

Das erste Stützmaterial oder die Stützmaterialien können beispielsweise Zirkoniumoxid, Siliziumkarbid, Siliziumnitrid, Aluminiumoxid, Glas, Keramik oder eine Kombination dieser Stoffe enthalten. Die Auswahl des ersten Stützmaterials hängt im Wesentlichen von dem ersten Abrasivmaterial ab, da die erste Stützmaterialhärte immer geringer ist als die erste Abrasivmaterialhärte.

Vorzugsweise umfasst das Werkzeug zum Materialabtrag mindestens eine zweite Abrasivschicht, die aus einer zweiten Kunststoffbindung besteht, offenporig ausgebildet ist, einen zweiten Reibungskoeffizienten, der geringer als der erste Reibungskoeffizient ist, aufweist und zwischen der ersten Abrasivschicht und dem Substrat angeordnet ist. Die zweite Abrasivschicht kann als Schleifschicht, Feinstschleifschicht bzw. als Polierschicht verwendet werden. Besonders bevorzugt wird die erste Abrasivschicht als Schleifschicht und die zweite Abrasivschicht als Feinstschleifschicht oder Polierschicht verwendet. Dadurch kann ein zu bearbeitendes Werkstück mit dem Werkzeug zum Materialabtrag zunächst geschliffen und anschließend mit demselben Werkzeug zum Materialabtrag poliert werden. Dabei weist auch die zweite Abrasivschicht, also die Feinstschleifschicht / Polierschicht, in der Kunststoffbindung gebundene Hartstoffkörner und ggf. weitere Additive zu Oberflächenaktivierung auf.

In die erste Abrasivschicht oder in die Abrasivschichten kann mindestens ein Kühlkanal eingebracht sein. Der mindestens eine Kühlkanal ist entweder als Ausnehmung oder als Erhebung in die erste Abrasivschicht und/oder in die weiteren Abrasivschichten eingebracht. Der mindestens eine Kühlkanal kann auch durch Lufteinschlüsse, die durch aufgeplatzte Mikrokapseln entstanden sind, in die erste Abrasivschicht und/oder in die weiteren Abrasivschichten eingebracht sein. Durch den mindestens einen Kühlkanal kann während eines Materialabtrags ein Kühlmittel, ein Schmiermittel, oder ein Kühl- und Schmiermittel fließen. Selbstverständlich ist die Geometrie des Kühlkanals frei wählbar und an mögliche Besonderheiten des Werkstücks anpassbar.

Die Aufgabe wird weiterhin durch ein Verfahren zur additiven Fertigung eines Werkzeugs zum Materialabtrag gelöst. Bei dem Verfahren werden eine erste Härte sowie mindestens ein erster Reibungskoeffizient für eine erste Kunststoffbindung vorgegeben. Die erste Härte und der erste Reibungskoeffizient werden üblicherweise in Abhängigkeit von einem Material eines zu bearbeitenden Werkstücks vorgegeben. Dazu kann das Werkstück vor der Fertigung des Werkzeugs zum Materialabtrag in einem Messverfahren vermessen und hinsichtlich seiner Härte und stofflichen Zusammensetzung analysiert werden, sofern diese nicht bereits bekannt sind. Das Werkzeug zum Materialabtrag kann in jedem Falle individuell für das zu bearbeitende Werkstück gefertigt werden. Durch die Wahl eines ersten Abrasivmaterials und einer ersten Abrasivmaterialkonzentration in der ersten Kunststoffbindung wird der erste Reibungskoeffizient der ersten Kunststoffbindung eingestellt. Der Reibungskoeffizient ergibt sich im Wesentlichen durch die Wahl und Konzentration des ersten Abrasivmaterials, da das aus Hartstoffkörnern bestehende erste Abrasivmaterial die härteste Komponente der Kunststoffbindung ist. Durch die Wahl eines ersten Stützmaterials und einer ersten Stützmaterialkonzentration in der ersten Kunststoffbindung wird die erste Härte der ersten Kunststoffbindung eingestellt. Das erste Stützmaterial dient dazu, das erste Abrasivmaterial und, wenn vorhanden, weitere Abrasivmaterialien zu stützen. Das Stützmaterial besteht dazu vorteilhaft ebenfalls aus Hartstoffkörnern, deren Durchmesser kleiner als der Durchmesser der Hartstoffkörnern des ersten Abrasivmaterials ist. Dadurch wird die erste Härte der ersten Kunststoffbindung im Wesentlichen durch die Wahl des ersten Stützmaterials und die Konzentration des ersten Stützmaterials in der Kunststoffbindung vorgegeben. Das erste Abrasivmaterial sowie das erste Stützmaterial werden in eine erste Kunststoffmatrix, die als Bindematerial dient, eingebracht, wodurch die erste Kunststoffbindung entsteht. Die erste Kunststoffbindung wird anschließend einem ersten Extruder zugeführt und mit dem ersten Extruder auf ein Substrat schichtweise aufgebracht, um eine erste Abrasivschicht zu bilden. Dazu kann beispielsweise das sogenannte *Fused Deposition Modelling,* auch als *Fused Filament Fabrication* bezeichnet, verwandt werden, bei dem das Werkzeug zur Materialbearbeitung aus einem schmelzfähigen Material schichtweise aufgebaut wird. Die Schichtdicken können dabei je nach den Eigenschaften der Kunststoffbindung und je nach Anwendung zwischen 0,025 mm und 1,25 mm variiert werden. Dadurch kann eine Werkzeuggeometrie flexibel gestaltet und überschüssiges Material vermieden werden.

Durch das Verfahren können Werkzeuge in kurzer Zeit und flexibel, das heißt angepasst an vorgegebene Anwendungen oder Werkstücke, auch in geringer Losgröße hergestellt werden. Somit lassen sich Lieferzeiten für Werkzeuge zum Materialabtrag senken und die Eigenschaften der Werkzeuge zum Materialabtrag, wie Härte und Reibungskoeffizient, gezielt auf eine vorgegebene Anwendung anpassen.

Vorteilhaft wird eine zweite Abrasivschicht, die aus einer zweiten Kunststoffbindung besteht, mittels eines zweiten Extruders gebildet. Das Bilden der zweiten Abrasivschicht kann gleichzeitig oder zeitlich versetzt zum Bilden der ersten Abrasivschicht erfolgen. Prinzipiell können auch mehrere erste Abrasivschichten und/oder mehrere zweite Abrasivschichten gebildet werden. Alternativ oder zusätzlich können auch mehr als zwei Abrasivschichten mit unterschiedlichen Eigenschaften gebildet werden. Wie viele Abrasivschichten gebildet werden und welche Eigenschaften diese aufweisen, hängt im Wesentlichen davon ab, wofür das Werkzeug zum Materialabtrag eingesetzt werden soll.

Die erste Kunststoffbindung und/oder die zweite Kunststoffbindung können dem ersten Extruder und/oder dem zweiten Extruder beispielsweise in Form eines Granulats oder eines Filaments zugeführt werden. Granulate und Filamente haben den Vorteil, dass sie leicht zu transportieren und zu lagern sowie aufgrund der verhältnismäßig gro-βen Oberfläche leicht zu erhitzen sind.

Vor dem Aufbringen der ersten Abrasivschicht kann eine zweite Abrasivschicht, die aus einer zweiten Kunststoffbindung besteht, auf das Substrat aufgebracht werden. Die zweite Abrasivschicht kann dann offenporig ausgebildet sein und einen zweiten Reibungskoeffizienten, der geringer als der erste Reibungskoeffizient ist, aufweisen. In diesem Fall wird die erste Abrasivschicht vorteilhaft als Schleifschicht ausgebildet und die zweite Abrasivschicht als Polierschicht ausgebildet. Durch die offenen Poren der zweiten Abrasivschicht, auf die die erste Abrasivschicht aufgebracht wird, kann eine Oberfläche des zu bearbeitenden Werkstücks poliert werden, nachdem sie geschliffen worden ist.

Zum Auftragen der zweiten Abrasivschicht können Mikrokapseln in mindestens eine der Kunststoffbindungen eingebracht werden. Die Mikrokapseln können durch ein Erhitzen mindestens einer Kunststoffbindung aufplatzen, vorteilhafterweise auch durch die erzeugte Reibungsenergie in der Wechselwirkung zwischen Abrasivschicht und Werkstückoberfläche wodurch Lufteinschlüsse in mindestens einer Abrasivschicht entstehen. Durch die Lufteinschlüsse entsteht eine offenporige Struktur, die sich sehr gut zum Polieren von Oberflächen eignet, da Wärme, Kühlmittel und Materialpartikel gut abgeführt werden können und die Struktur zugleich elastisch ist. In diesem Fall sind die Mikrokapseln nicht gefüllt. Alternativ können die Mikrokapseln, wie oben bereits erwähnt, mit Tensiden oder Kaliumhydroxid gefüllt sein und während eines Materialabtrags durch die mechanische Einwirkung aufplatzen. In diesem Fall kann die Menge an für die Materialbearbeitung benötigten Kühl- und/oder Schmiermitteln reduziert werden oder es werden gar keine zusätzlichen Kühl- und/oder Schmiermittel mehr bei der Materialbearbeitung benötigt. Die Mikrokapseln bestehen bevorzugt aus Glas oder Kunststoff und weisen einen Durchmesser von 0,1-1 mm auf.

Es können in Richtung einer Werkzeugachse oder senkrecht zur Richtung der Werkzeugachse oder in beliebigen, vorgegebenen Winkeln dazu mehrere Abrasivschichten auf das Substrat aufgebracht werden. Benachbarte Abrasivschichten können dann voneinander verschiedene Abrasivmaterialien und/oder Abrasivmaterialkonzentrationen aufweisen. Benachbarte Abrasivschichten können alternativ oder zusätzlich voneinander verschiedene Stützmaterialien und/oder Stützmaterialkonzentrationen aufweisen.

Beim Bilden der ersten Abrasivschicht oder der Abrasivschichten kann mindestens ein Kühlkanal in die erste Abrasivschicht oder die Abrasivschichten eingebracht werden. Der mindestens eine Kühlkanal kann beispielsweise durch eine Stützstruktur, die in die Kunststoffbindung eingefügt wird, eingebracht werden. Die Stützstruktur kann dazu löslich, beispielsweise wasserlöslich, sein und nach dem Aufbringen aller Abrasivschichten aus der Kunststoffbindung ausgespült werden. Alternativ können die Kühlkanäle durch ein entsprechendes Einbringen der Mikrokapseln, die bei dem Erhitzen der Kunststoffbindung aufplatzen und Lufteinschlüsse hinterlassen, eingebracht werden. Ebenso können beim 3D-Druck Stützstrukturen mit gedruckt werden, die die Kühlkanäle stabilisieren und gleichzeitig ein Durchströmen der Kühlflüssigkeit erlauben.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
- Fig. 1: eine erste Kunststoffbindung, umfassend eine erste Kunststoffmatrix, ein erstes Abrasivmaterial sowie ein erstes Stützmaterial,
- Fig. 2A-C: Seitenansichten unterschiedlicher Varianten eines Verfahrens zur additiven Herstellung eines Werkzeugs zum Materialabtrag,
- Fig. 3A: eine Ansicht einer ersten Ausführung eines Werkzeugs zum Materialabtrag,
- Fig. 3B: einen Schnitt der ersten Ausführung des Werkzeugs zum Materialabtrag in einer Seitenansicht,
- Fig. 3C: einen Schnitt einer zweiten Ausführung des Werkzeugs zum Materialabtrag in einer Seitenansicht,
- Fig. 4: einen Schnitt einer dritten Ausführung des Werkzeugs zum Materialabtrag in einer Seitenansicht,
- Fig. 5: eine Seitenansicht eines Schichtaufbaus mit einer ersten Abrasivschicht, einer zweiten Abrasivschicht, einer dritten Abrasivschicht und einer vierten Abrasivschicht,
- Fig. 6: eine Draufsicht auf eine vierte Ausführung des Werkzeugs zum Materialabtrag mit einer ersten Abrasivschicht und einer zweiten Abrasivschicht,
- Fig. 7: eine Draufsicht auf eine fünfte Ausführung des Werkzeugs zum Materialabtrag mit einer ersten Abrasivschicht und einer zweiten Abrasivschicht, und
- Fig. 8: eine Draufsicht auf eine sechste Ausführung des Werkzeugs zum Materialabtrag mit drei ersten Abrasivschichten und zwei zweiten Abrasivschichten.

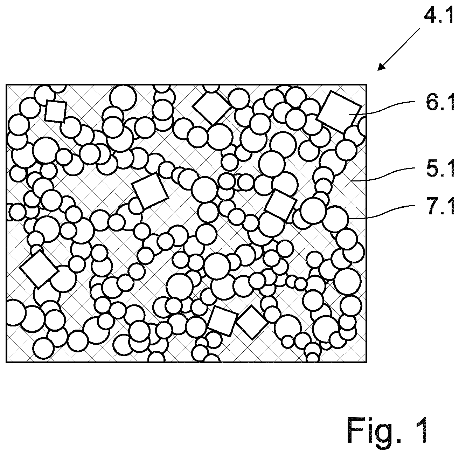

**Fig. 1** zeigt eine erste Kunststoffbindung 4.1, umfassend eine erste Kunststoffmatrix 5.1, ein erstes Abrasivmaterial 6.1 sowie ein erstes Stützmaterial 7.1. Die erste Kunststoffbindung 4.1 enthält eine Kunststoffmatrix 5.1, die als Bindematerial dient, in das alle weiteren Komponenten der ersten Kunststoffbindung 4.1 eingebettet sind. Das in der ersten Kunststoffbindung 4.1. enthaltene Abrasivmaterial 6.1 weist eine erste Härte und eine erste Konzentration in der ersten Kunststoffbindung 4.1 auf, wodurch ein erster Reibungskoeffizient der ersten Kunststoffbindung 4.1 festgelegt ist. Das in der ersten Kunststoffbindung 4.1 enthaltene Stützmaterial 7.1 weist eine erste Stützmaterialhärte, die geringer ist als die erste Abrasivmaterialhärte, und eine erste Stützmaterialkonzentration in der ersten Kunststoffbindung 4.1 auf, wodurch eine erste Härte der ersten Kunststoffbindung 4.1 festgelegt ist.

Die erste Kunststoffmatrix 5.1 ist schematisch als Gitter im Hintergrund dargestellt, in das das erste Abrasivmaterial 6.1, welches schematisch in Form von Quadraten dargestellt ist, und das erste Stützmaterial 7.1, welches schematisch in Form von Kreisen mit unterschiedlichen Durchmessern dargestellt ist, eingebettet sind. Es versteht sich, dass das erste Abrasivmaterial 6.1 und das erste Stützmaterial 7.1 auch eine andere Form, in der Regel eine unregelmäßige Form, aufweisen können.

Die Kunststoffbindung 4.1 ist dabei eine dreidimensionale Struktur, die bei der Verwendung des Werkzeugs 1 zum Materialabtrag, also während des Materialabtrags, verändert bzw. zerstört wird. Das Werkzeug 1 zum Materialabtrag nutzt sich während des Materialabtrags ab und weist eine begrenzte Lebensdauer auf.

Die erste Kunststoffbindung 4.1 kann beispielsweise einen Thermoplast als erste Kunststoffmatrix 5.1, ein keramisches Material als erstes Stützmaterial 7.1 und Diamantkörner als erstes Abrasivmaterial 6.1 enthalten. Durch das keramische erste Stützmaterial 6.1 kann eine hohe Zerspanungsleistung sowie ein großer Porenraum gewährleistet werden, wohingegen die verhältnismäßig weiche erste Kunststoffmatrix 5.1 den Verschleiß des Werkzeugs 1 zum Materialabtrag reduziert und die Bearbeitungsqualität am Werkstück verbessert.

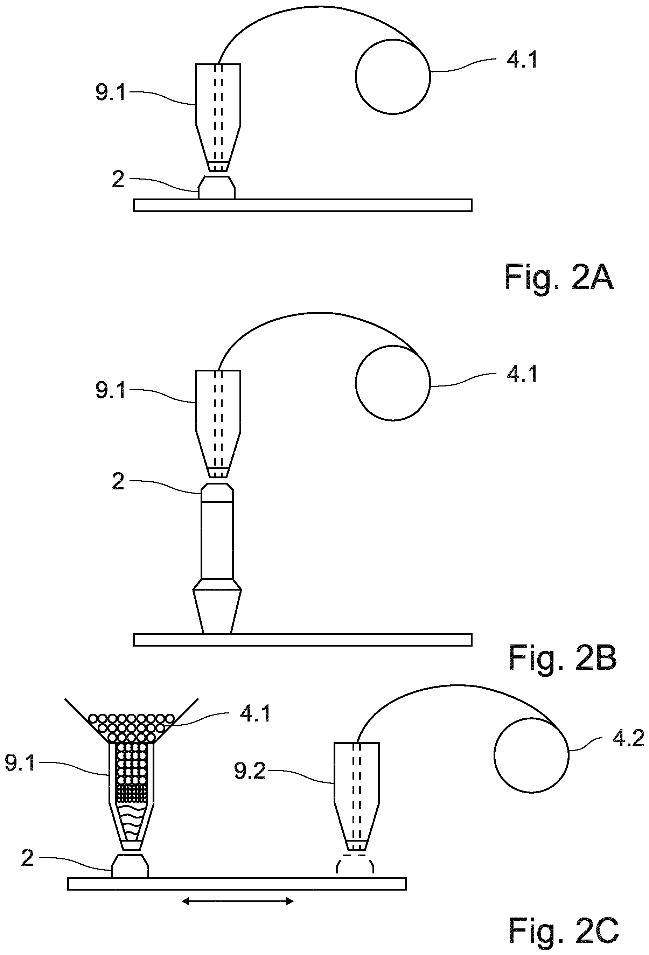

Unterschiedliche Varianten eines Verfahrens zur Herstellung eines Werkzeugs 1 zum Materialabtrag sind in den **Fig. 2A-C** dargestellt. Dabei werden zunächst eine erste Härte sowie ein erster Reibungskoeffizient für die erste Kunststoffbindung 4.1 vorgegeben. Anschließend werden ein erstes Abrasivmaterial 6.1, vorzugsweise aus Diamant, Siliziumcarbid, Siliziumnitrid, Aluminiumoxid, Zirkoniumoxid, Saphir, kubischem Bornitrid (CBN), Hartmetall oder einer Kombination dieser Stoffe und eine erste Abrasivmaterialkonzentration ausgewählt. Durch die Wahl des ersten Abrasivmaterials 6.1 und der ersten Abrasivmaterialkonzentration wird der erste Reibungskoeffizient der ersten Kunststoffbindung 4.1 eingestellt. Außerdem wird das erste Stützmaterial 7.1 vorzugsweise aus Zirkoniumoxid, Glas, Keramik Siliziumkarbid, Siliziumnitrid, Aluminiumoxid oder einer Kombination dieser Stoffe, ausgewählt. Durch die Wahl des ersten Stützmaterials 7.1 und der ersten Stützmaterialkonzentration in der ersten Kunststoffbindung 4.1 wird die erste Härte der ersten Kunststoffbindung 4.1 eingestellt. In der Folge werden das erste Abrasivmaterial 6.1 sowie das erste Stützmaterial 7.1 in die erste Kunststoffmatrix 5.1, die als Bindematerial dient, eingebracht, wodurch die erste Kunststoffbindung 4.1 entsteht. Die erste Kunststoffbindung 4.1 wird dann einem ersten Extruder 9.1 zugeführt, erhitzt und auf einem Substrat 2 schichtweise aufgebracht, um eine erste Abrasivschicht auf dem Substrat 2 zu bilden. In den Fig. 2A-C ist jeweils dargestellt, wie und in welcher Form die erste Kunststoffbindung 4.1 dem ersten Extruder 9.1 zugeführt wird.

In Fig. 2A wird die erste Kunststoffbindung 4.1 dem ersten Extruder 9.1 in Form eines Filaments zugeführt, dass auf einer Filamentrolle aufgewickelt ist. Um die erste Abrasivschicht 3.1 zu bilden kann das Substrat 2 bzw. die Bauplattform, auf der das Substrat 2 angeordnet ist, und/oder der erste Extruder 9.1 bewegt werden. Durch die Relativbewegung zwischen dem ersten Extruder 9.1 und dem Substrat 2 wird die erste Abrasivschicht 3.1 gebildet. Wenn das Werkzeug 1 zum Materialabtrag nicht direkt auf einem Werkzeugträger gefertigt wird, kann es im Nachhinein, beispielsweise durch eine Klebstoffschicht, mit dem Werkzeugträger verbunden werden.

In Fig. 2B wird die erste Kunststoffbindung 4.1 dem ersten Extruder 9.1 ebenfalls in Form eines Filaments zugeführt. Das Substrat 2 ist hier während des Bildens der ersten Abrasivschicht 3.1 auf einem Werkzeugträger angeordnet.

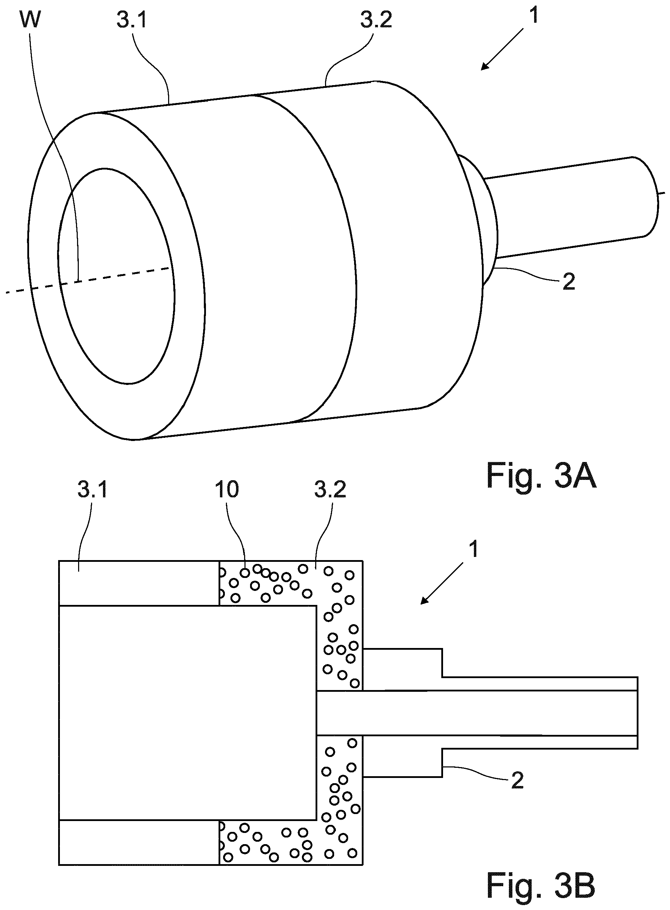

In Fig. 2C wird die erste Kunststoffbindung 4.1 dem ersten Extruder 9.1 in Form eines Granulats zugeführt. Das Aufschmelzen des Granulats infolge der Erhitzung im ersten Extruder 9.1 ist durch kleiner werdende Granulatkugeln und wellige Linien, die die verflüssigte erste Kunststoffbindung 4.1 abbilden, schematisch dargestellt. Eine zweite Kunststoffbindung wird einem zweiten Extruder 9.2 in Form eines Filaments zugeführt. Das Substrat 2 befindet sich unterhalb eines ersten Auslasses des ersten Extruders 9.1, durch welchen die erste Abrasivschicht 3.1; wie sie beispielsweise in Fig. 3A dargestellt ist, gebildet wird. Wenn die erste Abrasivschicht 3.1 gebildet worden ist, wird das Substrat 2 relativ zu dem ersten Extruder 9.1 und dem zweiten Extruder 9.2 so bewegt, dass es sich unterhalb eines zweiten Auslasses des zweiten Extruders 9.2 befindet, damit eine zweite Abrasivschicht 3.2, die aus einer zweiten Kunststoffbindung besteht, gebildet werden kann. Die Relativbewegung von Substrat 2 und erstem Extruder 9.1 sowie zweitem Extruder 9.2 ist durch einen Doppelpfeil unterhalb der Bauplattform angedeutet.

Zum Auftragen der Abrasivschichten können Mikrokapseln in die erste Kunststoffbindung 4.1 und/oder in die zweite Kunststoffbindung eingebracht werden. Die Mikrokapseln können durch ein Erhitzen der ersten Kunststoffbindung 4.1 und/oder der zweiten Kunststoffbindung aufplatzen, wodurch Lufteinschlüsse 10 entstehen. Die Mikrokapseln können alternativ mit Tensiden oder Kaliumhydroxid gefüllt sein und während eines Materialabtrags aufplatzen.

Die Abrasivschichten können durch den ersten Extruder 9.1 oder durch den ersten Extruder 9.1 und den zweiten Extruder 9.2 in Richtung einer Werkzeugachse W, um die das Werkzeug 1 zum Materialabtrag gedreht werden kann, übereinander oder senkrecht zur Richtung der Werkzeugachse W oder auch in anderen Winkeln zu dieser nebeneinander aufgebracht werden.

Eine erste Ausführung eines Werkzeugs 1 zum Materialabtrag ist in **Fig. 3A** abgebildet. Die erste Ausführung des Werkzeugs 1 zum Materialabtrag weist ein Substrat 2 sowie eine erste Abrasivschicht 3.1 und eine zweite Abrasivschicht 3.2, bestehend aus einer zweiten Kunststoffbindung mit einem zweiten Reibungskoeffizienten, auf. Die zweite Kunststoffbindung besteht aus einer zweiten Kunststoffmatrix, einem zweiten Abrasivmaterial sowie einem zweiten Stützmaterial. Die zweite Abrasivschicht 3.2 ist auf das Substrat 2 aufgebracht und die erste Abrasivschicht 3.1 ist auf die zweite Abrasivschicht 3.2 aufgebracht. Die erste Abrasivschicht 3.1 und die zweite Abrasivschicht 3.2 sind in der Richtung der Werkzeugachse W übereinander angeordnet. Die Flächen der ersten Abrasivschicht 3.1 und der zweiten Abrasivschicht 3.2, mit denen jeweils das Werkstück bearbeitet wird, haben in einer Draufsicht jeweils die Form eines Kreisrings. Um Material von einem Werkstück abzutragen wird das Werkzeug 1 zum Materialabtrag entlang der Werkzeugachse W gedreht.

Ein Schnitt durch die erste Ausführung des Werkzeugs 1 zum Materialabtrag ist in **Fig. 3B** gezeigt. Die zweite Abrasivschicht 3.2 weist Lufteinschlüsse 10 auf und kann als Polierschicht verwendet werden. Somit kann mit der ersten Ausführung des Werkzeugs 1 zum Materialabtrag ein Werkstück oder mehrere Werkstücke geschliffen und poliert werden.

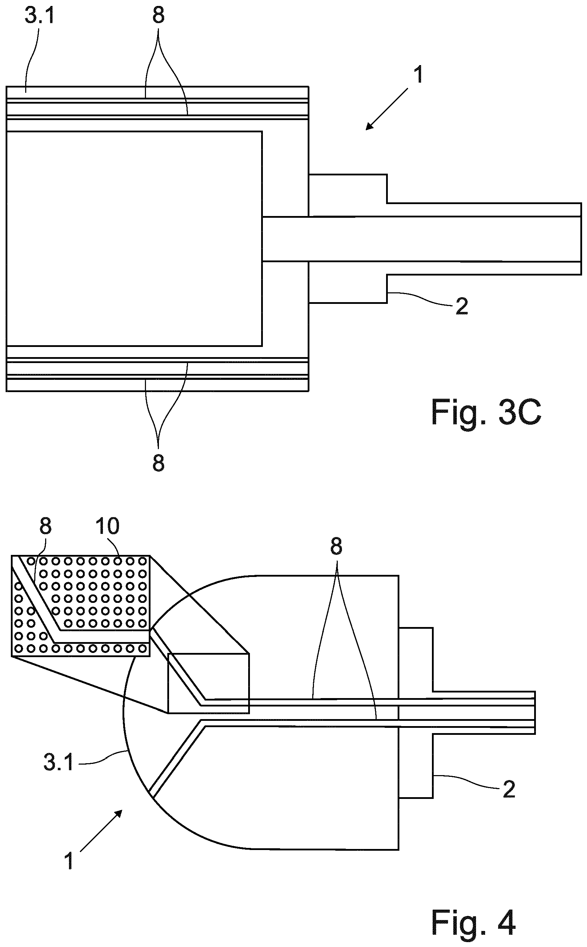

Eine zweite Ausführung des Werkzeugs 1 zum Materialabtrag ist in **Fig. 3C** dargestellt. Hier umfasst das Werkzeug 1 zum Materialabtrag ein Substrat 2 sowie eine erste Abrasivschicht 3.1. In die erste Abrasivschicht 3.1 sind Kühlkanäle 8 eingebracht.

Beim Bilden der ersten Abrasivschicht 3.1 und/oder der zweiten Abrasivschicht 3.2 können zudem Kühlkanäle 8 in die erste Abrasivschicht 3.1 und/oder die zweite Abrasivschicht 3.2 eingebracht werden.

Eine dritte Ausführung des Werkzeugs 1 zum Materialabtrag ist in **Fig. 4** abgebildet. Hier umfasst das Werkzeug 1 zum Materialabtrag ein Substrat 2 sowie eine erste Abrasivschicht 3.1 und auch bei der dritten Ausführung sind in die erste Abrasivschicht 3.1 Kühlkanäle 8 eingebracht. Die erste Fläche der ersten Abrasivschicht 3.1, mit der ein Materialabtrag an einem Werkstück erfolgt, ist bei der dritten Ausführung jedoch ein Kreis, da die Oberfläche des Werkzeugs 1 zum Materialabtrag halbkugelförmig ausgebildet ist. In Fig. 4 ist außerdem ein vergrößerter Ausschnitt eines Teils des Werkzeugs 1 zum Materialabtrag dargestellt, der einen Kühlkanal 8 sowie den Kühlkanal 8 umgebende Lufteinschlüsse 10 aufweist.

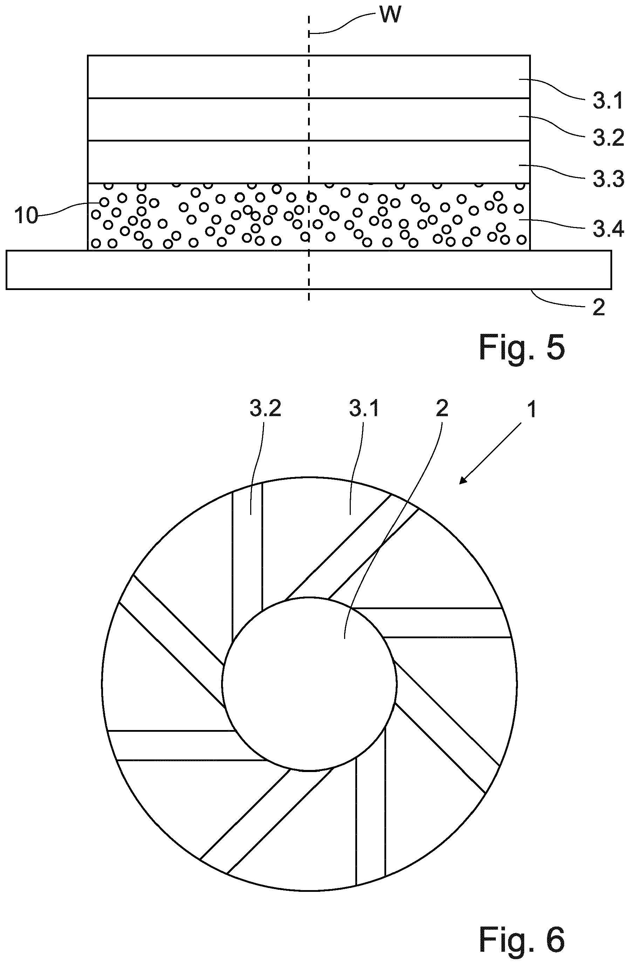

Ein Schichtaufbau mit einem Substrat 2, einer ersten Abrasivschicht 3.1, einer zweiten Abrasivschicht 3.2, einer dritten Abrasivschicht 3.3 und einer vierten Abrasivschicht 3.4 ist in **Fig. 5** gezeigt. Die erste Abrasivschicht 3.1, die zweite Abrasivschicht 3.2 und die dritte Abrasivschicht 3.3 sind jeweils Schleifschichten, wobei die erste Abrasivschicht 3.1 einen ersten Reibungskoeffizienten aufweist, der größer ist als ein zweiter Reibungskoeffizient der zweiten Abrasivschicht 3.2 ist. Der zweite Reibungskoeffizient ist größer als ein dritter Reibungskoeffizient der dritten Abrasivschicht 3.3. Die vierte Abrasivschicht 3.4 ist eine Polierschicht und weist einen vierten Reibungskoeffizienten auf, der geringer ist als der erste Reibungskoeffizient, der zweite Reibungskoeffizient und der dritte Reibungskoeffizient. Die vierte Abrasivschicht 3.4 weist Lufteinschlüsse 10 auf. Damit die Reibungskoeffizienten der Abrasivschichten sich unterscheiden, weisen diese unterschiedliche Abrasivmaterialien und/oder unterschiedliche Abrasivmaterialkonzentrationen auf. Wenn die Abrasivschichten unterschiedliche Abrasivmaterialien aufweisen, können diese sich hinsichtlich ihrer Abrasivmaterialhärte und/oder ihrer Korngröße voneinander unterscheiden. Die Abrasivschichten können zudem voneinander verschiedene Stützmaterialien und/oder Stützmaterialkonzentrationen aufweisen. Wenn die Abrasivschichten voneinander verschiedene Stützmaterialien aufweisen können diese sich hinsichtlich ihrer Stützmaterialhärte voneinander unterscheiden.

Bei der Verwendung eines Werkzeugs 1 zum Materialabtrag mit dem in Fig. 5 dargestellten Schichtaufbau nimmt der Materialabtrag mit jeder weiteren Abrasivschicht ab. Bei einer Verwendung des Werkzeugs 1 zum Materialabtrag wird erst die erste Abrasivschicht 3.1, dann die zweite Abrasivschicht 3.2 und so weiter zum Schleifen bzw. zum Polieren verwendet. Somit können mit einem einzigen Werkzeug 1 zum Materialabtrag ein oder mehrere Werkstücke geschliffen und poliert werden.

Prinzipiell können auf dem Substrat auch mehr als vier Abrasivschichten und/oder mehrere gleiche Abrasivschichten aufgebracht sein. Wie viele und welche, hängt selbstverständlich von dem zu bearbeitenden Werkstück und dessen zu erreichender Form ab.

Eine vierte Ausführung des Werkzeugs 1 zum Materialabtrag ist in **Fig. 6** abgebildet. Das Werkzeug 1 zum Materialabtrag besteht aus einem Substrat 2, der ersten Abrasivschicht 3.1, die einen Kreisring auf dem darunterliegenden Substrat 2 bedeckt und der zweiten Abrasivschicht 3.2. Die zweite Abrasivschicht 3.2 ist nur in streifenförmigen Abschnitten auf der darunterliegenden ersten Abrasivschicht 3.1 aufgebracht. Dies erlaubt eine Anpassung der Schnittgeschwindigkeit in Abhängigkeit des Abstandes entlang des Radius vom Mittelpunkt des Werkzeugs aus gemessen. Darüber hinaus entsteht so ein großer, freier Spanraum, der einerseits in Bezug auf eine Kühlung vorteilhaft ist und andererseits den Abtransport von Spänen erleichtert.

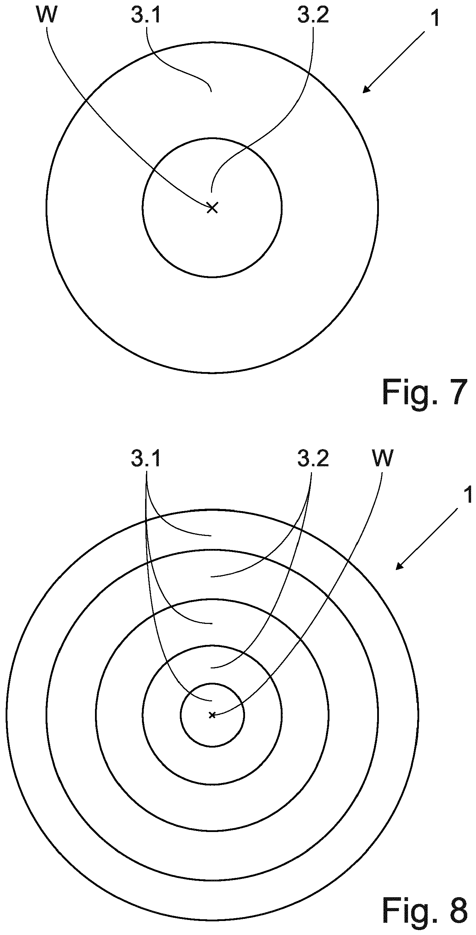

Eine fünfte Ausführung des Werkzeugs 1 zum Materialabtrag zeigt **Fig. 7****.** Bei der hier dargestellten fünften Ausführung sind eine erste Abrasivschicht 3.1 und eine zweite Abrasivschicht 3.2 senkrecht zur Richtung der Werkzeugachse W nebeneinander angeordnet. Die erste Abrasivschicht 3.1 ist dabei in einem Kreisring um die zweite Abrasivschicht 3.2, die kreisförmig aufgebracht ist, aufgebracht. Die erste Abrasivschicht 3.1 und die zweite Abrasivschicht 3.2 sind jeweils auf dem darunterliegenden und nicht dargestellten Substrat 2 aufgebracht.

Eine sechste Ausführung des Werkzeugs 1 zum Materialabtrag zeigt **Fig. 8****.** Die sechste Ausführung weist drei erste Abrasivschichten 3.1 und zwei zweite Abrasivschichten 3.2 auf. Die ersten Abrasivschichten 3.1 und die zweiten Abrasivschichten 3.2 sind senkrecht zur Richtung der Werkzeugachse W nebeneinander in Form von konzentrischen Kreisringen mit einem Kreis in der Mitte angeordnet.

Die Eigenschaften des Werkzeugs 1 zur Materialbearbeitung können dadurch, dass es mittels additiver Verfahren gefertigt wird, individuell an das Werkstück angepasst werden. Auch die Dimensionierung und/oder die Form des Werkzeugs 1 zum Materialabtrag kann frei gewählt und an das Werkstück angepasst werden. Das Werkzeug 1 zur Materialbearbeitung weist einen flexibel einstellbaren Reibungskoeffizienten sowie eine flexibel einstellbare Härte und eine vergleichsweise lange Lebensdauer auf.

### Bezugszeichenliste

- 1: Werkzeug
- 2: Substrat
- 3.1: erste Abrasivschicht
- 3.2: zweite Abrasivschicht
- 3.3: dritte Abrasivschicht
- 3.4: vierte Abrasivschicht
- 4.1: erste Kunststoffbindung
- 5.1: erste Kunststoffmatrix
- 6.1: erstes Abrasivmaterial
- 7.1: erstes Stützmaterial
- 8: Kühlkanal
- 9.1: erster Extruder
- 9.2: zweiter Extruder
- 10: Lufteinschluss
- W: Werkzeugachse

## Patentansprüche

1. Werkzeug (1) zum Materialabtrag, umfassend eine auf einem Substrat (2) aufgebrachte erste Abrasivschicht (3.1) mit einer ersten Kunststoffbindung (4.1), wobei die erste Kunststoffbindung (4.1)
- eine erste Kunststoffmatrix (5.1), die als Bindematerial dient, in das alle weiteren Komponenten der ersten Kunststoffbindung (4.1) eingebettet sind, und
- ein erstes Abrasivmaterial (6.1), welches eine erste Abrasivmaterialhärte, eine erste Korngröße und eine erste Konzentration in der ersten Kunststoffbindung (4.1) aufweist, wodurch ein erster Reibungskoeffizient der ersten Kunststoffbindung (4.1) festgelegt ist, enthält, **dadurch gekennzeichnet, dass**
- die erste Kunststoffbindung (4.1) ein erstes Stützmaterial (7.1), welches eine erste Stützmaterialhärte, die geringer ist als die erste Abrasivmaterialhärte, und eine erste Stützmaterialkonzentration in der ersten Kunststoffbindung (4.1) aufweist, wodurch eine erste Härte der ersten Kunststoffbindung (4.1) festgelegt ist, enthält.

2. Werkzeug (1) zum Materialabtrag nach Anspruch 1, **dadurch gekennzeichnet, dass** das Werkzeug (1) zum Materialabtrag mehrere Abrasivschichten aufweist und benachbarte Abrasivschichten voneinander verschiedene Abrasivmaterialien und/oder Korngrößen und/oder Abrasivmaterialkonzentrationen aufweisen.

3. Werkzeug (1) zum Materialabtrag nach Anspruch 2, **dadurch gekennzeichnet, dass** die Abrasivschichten in Richtung einer Werkzeugachse (W), um die das Werkzeug (1) zum Materialabtrag gedreht werden kann, übereinander angeordnet sind, oder dass die Abrasivschichten senkrecht zur Richtung einer Werkzeugachse (W), um die das Werkzeug (1) zum Materialabtrag gedreht werden kann, nebeneinander angeordnet sind.

4. Werkzeug (1) zum Materialabtrag nach einem der Ansprüche 2 oder 3, **dadurch gekennzeichnet, dass** benachbarte Abrasivschichten voneinander verschiedene Abrasivmaterialien aufweisen und die Abrasivmaterialien sich hinsichtlich ihrer Abrasivmaterialhärte und/oder ihrer Korngröße voneinander unterscheiden.

5. Werkzeug (1) zum Materialabtrag nach einem der Ansprüche 1 bis 4, **dadurch gekennzeichnet, dass** benachbarte Abrasivschichten voneinander verschiedene Stützmaterialien, welche sich bevorzugt hinsichtlich ihrer Stützmaterialien unterscheiden, und/oder Stützmaterialkonzentrationen aufweisen.

6. Werkzeug (1) zum Materialabtrag nach einem der Ansprüche 1 bis 5, **dadurch gekennzeichnet, dass** das erste Abrasivmaterial (6.1) oder die Abrasivmaterialien Diamant, Siliziumcarbid, Siliziumnitrid, Aluminiumoxid, Zirkoniumoxid, Saphir, kubisches Bornitrid (CBN), Hartmetall oder eine Kombination dieser Stoffe enthalten.

7. Werkzeug (1) zum Materialabtrag nach einem der Ansprüche 1 bis 6, **dadurch gekennzeichnet, dass** das das erste Stützmaterial (7.1) oder die Stützmaterialien Zirkoniumoxid, Glas, Keramik Siliziumkarbid, Siliziumnitrid, Aluminium oder eine Kombination dieser Stoffe enthalten.

8. Werkzeug (1) zum Materialabtrag nach einem der Ansprüche 1 bis 7, **dadurch gekennzeichnet, dass** das Werkzeug (1) zum Materialabtrag mindestens eine zweite Abrasivschicht (3.2) umfasst, die aus einer zweiten Kunststoffbindung besteht, offenporig ausgebildet ist, einen zweiten Reibungskoeffizienten, der geringer als der erste Reibungskoeffizient ist, aufweist und zwischen der ersten Abrasivschicht (3.1) und dem Substrat (2) angeordnet ist.

9. Werkzeug (1) zum Materialabtrag nach einem der Ansprüche 1 bis 8, **dadurch gekennzeichnet, dass** in die erste Abrasivschicht (3.1) oder in die Abrasivschichten mindestens ein Kühlkanal (8) eingebracht ist.

10. Verfahren zur additiven Fertigung eines Werkzeugs (1) zum Materialabtrag, bei dem
- eine erste Härte sowie mindestens ein erster Reibungskoeffizient für eine erste Kunststoffbindung (4.1) vorgegeben werden,
- durch die Wahl eines ersten Abrasivmaterials (6.1) und einer ersten Abrasivmaterialkonzentration in der ersten Kunststoffbindung (4.1) der erste Reibungskoeffizient der ersten Kunststoffbindung (4.1) eingestellt wird,
- durch die Wahl eines ersten Stützmaterials (7.1) und einer ersten Stützmaterialkonzentration in der ersten Kunststoffbindung (4.1) die erste Härte der ersten Kunststoffbindung (4.1) eingestellt wird,
- das erste Abrasivmaterial (6.1) sowie das erste Stützmaterial (7.1) in eine erste Kunststoffmatrix (5.1), die als Bindematerial dient, eingebracht werden, wodurch die erste Kunststoffbindung (4.1) entsteht,
- die erste Kunststoffbindung (4.1) einem ersten Extruder (9.1) zugeführt wird, und
- die erste Kunststoffbindung (4.1) auf einem Substrat (2) schichtweise aufgebracht wird, um eine erste Abrasivschicht (3.1) zu bilden.

11. Verfahren nach Anspruch 10, wobei eine zweite Abrasivschicht (3.2), die aus einer zweiten Kunststoffbindung besteht, mittels eines zweiten Extruders (9.2) gebildet wird.

12. Verfahren nach Anspruch 10 oder 11, wobei die erste Kunststoffbindung (4.1) und/oder die zweite Kunststoffbindung dem ersten Extruder (9.1) und/oder dem zweiten Extruder (9.2) in Form eines Granulats oder eines Filaments zugeführt werden.

13. Verfahren nach einem der Ansprüche 10 bis 12, wobei vor dem Aufbringen der ersten Abrasivschicht (3.1) eine zweite Abrasivschicht (3.2), die aus einer zweiten Kunststoffbindung besteht, auf das Substrat (2) aufgebracht wird und die zweite Abrasivschicht (3.2) offenporig ausgebildet ist und einen zweiten Reibungskoeffizienten, der geringer als der erste Reibungskoeffizient ist, aufweist.

14. Verfahren nach Anspruch 13, wobei zum Auftragen mindestens einer der Abrasivschichten Mikrokapseln in mindestens eine Kunststoffbindung eingebracht werden.

15. Verfahren nach Anspruch 14, wobei die Mikrokapseln durch ein Erhitzen mindestens einer Kunststoffbindung aufplatzen, wodurch Lufteinschlüsse (10) entstehen, oder wobei die Mikrokapseln aus Glas oder Kunststoff bestehen und/oder mit Tensiden oder Kaliumhydroxid gefüllt sind und während eines Materialabtrags aufplatzen.

16. Verfahren nach einem der Ansprüche 10 bis 15, wobei mehrere Abrasivschichten auf das Substrat (2) in Richtung einer Werkzeugachse (W), um die das Werkzeug (1) zum Materialabtrag gedreht werden kann, übereinander oder senkrecht zur Richtung einer Werkzeugachse (W) oder in vorgegebenen Winkeln dazu nebeneinander aufgebracht werden und verschiedene Abrasivmaterialien und/oder Abrasivmaterialkonzentrationen aufweisen.

17. Verfahren nach einem der Ansprüche 10 bis 16, wobei mehrere Abrasivschichten auf das Substrat (2) aufgebracht werden und benachbarte Abrasivschichten voneinander verschiedene Stützmaterialien und/oder Stützmaterialkonzentrationen aufweisen.

18. Verfahren nach einem der Ansprüche 10 bis 17, wobei beim Bilden der ersten Abrasivschicht (3.1) oder der Abrasivschichten mindestens ein Kühlkanal (8) in die erste Abrasivschicht (3.1) oder die Abrasivschichten eingebracht wird.
